# FASCICULE DE BREVET EUROPEEN

(11) **EP 2 143 637 B1**
(45) Date de publication et mention de la délivrance du brevet: **02.10.2013**
(21) Numéro de dépôt: 09305648.9
(22) Date de dépôt: 06.07.2009
(51) Int. Cl.: B64D 15/12

(54) **Procédé d'assemblage d'un tapis de dégivrage et d'un blindage métallique sur une structure**
Verfahren zum Zusammenbau einer Enteisungsdecke und eines Metallbelags auf einer Struktur
Method for mounting a de-icing mat and a metal shield on a structure

(30) Priorité: 07.07.2008 FR 0854593
(43) Date de publication de la demande: 13.01.2010
(73) Titulaire: AERAZUR, 78370 Plaisir (FR)
(72) Inventeur: Boissy, Loïc, 76320 Caudebec les Elbeufs (FR)
(74) Mandataire: Zimmermann, Alain

(56) Documents cités:
- GB-A- 850 339
- GB-A- 885 131

## Description

La présente invention concerne un procédé d'assemblage d'un tapis de dégivrage et d'un blindage métallique sur une structure.

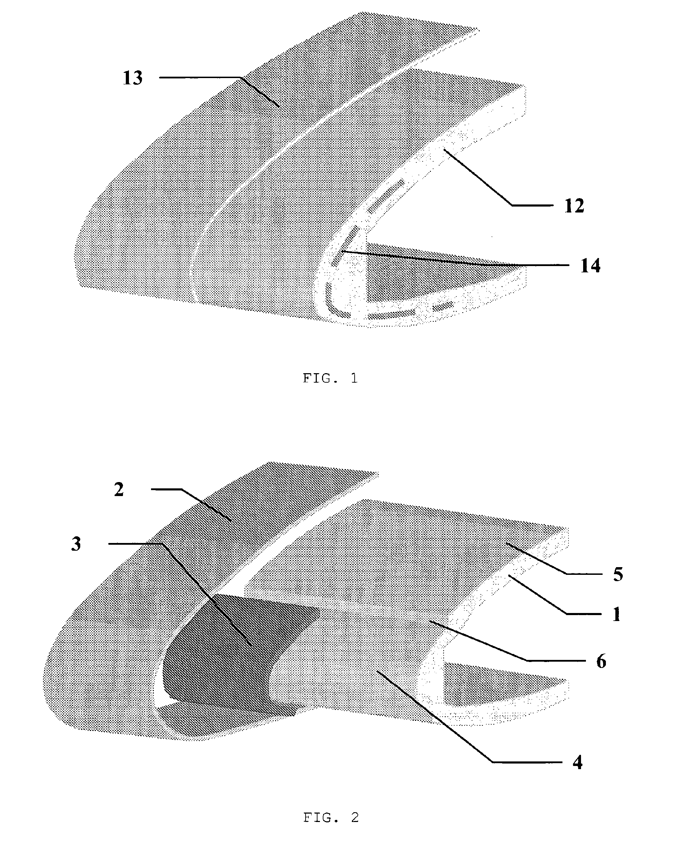

Il est connu de réaliser, comme illustré à la figure 1, une structure 12, telle une structure de bord d'attaque de voilure, en matière métallique ou composite. Classiquement une telle structure est protégée par un blindage métallique 13 recouvrant sa surface externe. Le but de ce blindage métallique 13 est d'assurer une protection externe afin de protéger la structure 12 de l'érosion, des chocs et plus généralement de l'environnement. Ce blindage 13 est de plus conducteur afin de présenter une continuité électrique de surface permettant d'évacuer d'éventuels impacts de foudre. Cependant, ce blindage métallique 13, est au contact des conditions d'environnement extrêmes rencontrées par une pièce de voilure aéronautique et est sujet au givrage. Aux fins de dégivrage ou d'antigivrage de la surface externe du blindage métallique 13, la structure 12 comprend avantageusement un moyen 14 de dégivrage ou d'antigivrage. Ce moyen 14, par exemple un moyen chauffant 14 est, de manière classique, intimement intégré dans la structure 12. Afin de permettre un assemblage parfait, le blindage métallique 13 et la structure 12 peuvent être vulcanisés ensemble.

De telles définition et fabrication rendent impossible tout démontage du blindage métallique 13 sans destruction de la structure 12. Il est ainsi impossible de remplacer le moyen 14 de dégivrage ou d'antigivrage. Toute maintenance impose un remplacement complet de l'ensemble structure/blindage/moyen de dégivrage ou d'antigivrage.

Une telle structure de bord d'ataque est connue de GB850,339, qui montre toutes les caractéristiques du préambule de la revendication 1.

Un but de la présente invention est de rendre possible un démontage du blindage métallique, un remplacement de la structure, un remplacement du blindage ou encore un remplacement du moyen de dégivrage ou d'antigivrage.

Pour cela, il est proposé un procédé d'assemblage d'un tapis de dégivrage et d'un blindage métallique externe de protection, sur une structure, telle une structure de bord d'attaque de voilure, comportant les étapes suivantes :
fabrication d'un tapis de dégivrage indépendant de ladite structure,
mise en place du tapis de dégivrage, entre ladite structure et le blindage métallique, ledit tapis de dégivrage ne couvrant qu'une partie de la surface externe de ladite structure,
fixation dudit blindage métallique, couvrant entièrement ledit tapis de dégivrage, sur la partie de la surface externe de ladite structure non couverte par le tapis de dégivrage et dont le blindage métallique présente une épaisseur réduite dans la partie couvrant le tapis de dégivrage et une épaisseur augmentée dans la partie ne couvrant pas le tapis de dégivrage.

Selon une autre caractéristique de l'invention, le tapis de dégivrage comprend une matrice élastomère.

Alternativement ou de manière complémentaire, le tapis de dégivrage comprend une matrice composite.

Selon une autre caractéristique de l'invention, le tapis de dégivrage comprend un réseau de résistances chauffantes en métal.

Alternativement ou de manière complémentaire, le tapis de dégivrage comprend un réseau de résistances chauffantes en fibres conductrices.

Selon une autre caractéristique de l'invention, la structure présente sur sa face externe, un logement apte à accueillir le tapis de dégivrage.

Selon une autre caractéristique de l'invention, la structure est métallique ou composite.

Selon une autre caractéristique de l'invention, le tapis de dégivrage est mis en place par assemblage préalable avec le blindage métallique.

Selon une autre caractéristique de l'invention, le tapis de dégivrage est collé sur le blindage métallique.

Selon une autre caractéristique de l'invention, le tapis de dégivrage composite est directement drapé sur le blindage métallique.

Selon une autre caractéristique de l'invention, le tapis de dégivrage est mis en place par assemblage préalable avec la structure.

Selon une autre caractéristique de l'invention, la fixation du blindage métallique sur la structure est réalisée par rivetage ou par vissage.

Selon une autre caractéristique de l'invention, le procédé d'assemblage comprend encore une étape d'injection d'un matériau de remplissage dans un espace délimité entre le tapis de dégivrage et la structure.

Selon une autre caractéristique de l'invention, le matériau de remplissage est choisi parmi : un gel de silicone, un élastomère sous forme de pâte ou de gel autovulcanisant, une mousse de polyuréthane.

L'invention va maintenant être décrite plus en détail en référence à des modes de réalisation particuliers donnés à titre d'illustration uniquement et représentés sur les figures annexées dans lesquelles :
- la figure 1 est une vue en perspective coupée, d'un objet selon l'art antérieur et a déjà été décrite,
- les figures 2 et 3 sont des vues en perspective coupée d'un objet obtenu par le procédé selon l'invention,
- la figure 4 est une autre vue en coupe d'un objet obtenu par le procédé selon l'invention,
- la figure 5 est une autre vue en perspective coupée illustrant un autre mode de réalisation d'un objet obtenu par le procédé selon l'invention.

Il va de soi que la description détaillée de l'objet de l'invention, donnée uniquement à titre d'illustration, ne constitue en aucune manière une limitation, les équivalents techniques étant également compris dans le champ de la présente invention.

En se référant à la figure 2, le principe de l'invention apparaît clairement. Il consiste à remplacer le moyen 14 de dégivrage intégré à la structure 12 par un tapis 3 de dégivrage indépendant de la structure 1, et à réaliser un assemblage de l'ensemble en disposant ledit tapis 3 de dégivrage entre la structure 1 et le blindage métallique 3.

Pour cela, le procédé assemble un tapis de dégivrage 3 et un blindage métallique 2 externe de protection, sur une structure 1. La structure 1 est typiquement une structure 1 de bord d'attaque de voilure. Il peut s'agir d'un bord d'aile, de queue ou de gouverne d'avion ou encore d'un bord de pale de rotor d'hélicoptère. Le procédé d'assemblage comporte les étapes suivantes.

Une première étape consiste à fabriquer un tapis de dégivrage 3 indépendant de ladite structure 1. Ceci permet de constituer une entité de maintenance "tapis de dégivrage" qui peut être remplacée de manière indépendante. De plus, ledit tapis de dégivrage 3 est fabriqué de manière autonome. Il est contrôlé en termes de bon fonctionnement, d'isolation électrique, de caractéristiques électriques avant son installation sur la structure 1. Au contraire, la fabrication selon l'art antérieur nécessite la réalisation complète de la structure intégrée 12, avant de pouvoir procéder aux tests. L'invention permet ainsi avantageusement de réduire les coûts de rebut.

Dans une seconde étape le tapis de dégivrage 3 est mis en place, entre la structure 1 et le blindage métallique 2. Avantageusement, le tapis de dégivrage 3 ne couvre qu'une partie 4 de la surface externe de ladite structure 1. Ainsi sur la figure 2 la partie couverte est celle, la plus sujette au givrage, du bord d'attaque.

Une troisième étape consiste à fixer le blindage métallique 2. Ce dernier couvre entièrement ledit tapis de dégivrage 3, et déborde de plus sur une partie 5 de la surface externe de la structure 1, qui n'est pas couverte par le tapis de dégivrage 3. Le tapis de dégivrage 3 est ainsi intégré entre la structure 1 et le blindage métallique 2 et couvre une partie de surface couverte 4. Le blindage métallique 2 est directement en contact avec la structure 1 sur une partie 5 non couverte. Cette partie non couverte 5 est avantageusement employée pour y réaliser la fixation du blindage métallique 2 directement sur la structure 1.

Le tapis 3 de dégivrage peut être un tapis 3 chauffant. Ce tapis 3 chauffant, est de manière classique réalisé par des résistances chauffantes intégrées dans une matrice assurant le maintien et la protection desdites résistances chauffantes.

Selon un premier mode de réalisation, ladite matrice est en élastomère. Il peut s'agir de Nitrile, de Polyuréthane, ou encore de Polychloroprène. Cette matrice élastomère peut encore être renforcée par du tissu de verre ou de polyamide.

Selon un second mode de réalisation, ladite matrice est composite. Elle est alors réalisée par drapage, selon les méthodes connues de l'homme du métier, de deux couches composites encadrant le réseau de résistances chauffantes.

Lesdites résistances chauffantes peuvent être réalisées au moyen d'un réseau de résistances chauffantes en métal.

Alternativement, lesdites résistances chauffantes peuvent être réalisées au moyen d'un réseau de résistances chauffantes réalisées en fibres conductrices. De telles fibres conductrices sont par exemple des fibres discontinues et conductrices de l'électricité, ces fibres ayant de préférence une longueur au plus égale à 50 mm, par exemple de 0,1 à 50 mm.

De préférence, les fibres susvisées comprennent chacune une âme recouverte d'un métal conducteur de l'électricité ; l'âme est avantageusement constituée par un matériau choisi dans le groupe constituée par une fibre de carbone, une fibre naturelle, une fibre de polyester, une fibre de polyamide et une fibre de verre.

A titre d'exemples de fibre naturelle, on citera le coton et le lin.

A titre de fibre de polyester, on citera des fibres de polyester de haute ténacité, telles que des fibres de polyéthylène téréphtalate, notamment des fibres de DACRON^{®}, de TERYLENE^{®} ou de TRERIVA^{®}.

La fibre de polyamide est de préférence du type PA6 (Nylon 6) ou PA 6,6 (Nylon 6,6).

Le métal conducteur recouvrant l'âme des fibres est avantageusement choisi parmi le nickel, un acier inoxydable, le cuivre, l'argent, l'or et leurs mélanges.

L'épaisseur de la couche de métal sur l'âme des fibres est de préférence comprise dans la plage de 0,005 à 2µm.

Par ailleurs, l'âme de chaque fibre a notamment une longueur de 0,1 à 50 mm et un diamètre de 1 à 20 µm.

Dans une même résistance, peuvent être mises en oeuvre des fibres identiques ou des fibres différant par la nature de leur âme et/ou la nature du métal conducteur.

A titre d'exemple de fibres, on citera notamment les fibres de carbone pourvues d'un revêtement de nickel, connues sous la marque TENAX-J HTA SU 41 NI 25 et commercialisées par la société TOHO TENAX.

Afin d'accueillir le tapis de dégivrage 3, la structure 1 présente avantageusement, sur sa face externe, un logement 6, de dimensions sensiblement égales à celles du tapis de dégivrage 3, pour pouvoir accueillir le tapis de dégivrage 3.

La structure 1 peut être réalisée selon toutes les méthodes connues de l'homme du métier. Elle peut ainsi être métallique ou composite.

Le blindage métallique 2 est classiquement un feuillard mince. Il présente typiquement une épaisseur de l'ordre de 0,6 mm dans la partie 7 couvrant le tapis de dégivrage 3. Afin de faciliter le dégivrage, il convient que cette épaisseur reste assez faible. Une telle épaisseur peut cependant s'avérer insuffisante pour réaliser la fixation sur la structure 1. Avantageusement le blindage métallique 2 présente une épaisseur plus importante, de l'ordre de 3 à 5 mm dans la partie 8 ne couvrant pas le tapis de dégivrage 3.

Selon un mode de réalisation, le tapis de dégivrage 3 peut être assemblé, dans une première opération, avec le blindage métallique 2. L'ensemble étant ensuite assemblé avec la structure 1 dans une seconde opération.

Le tapis de dégivrage 3 peut être assemblé sur le blindage métallique 2 par collage. Ceci est applicable tant à une matrice élastomère, qu'à une matrice composite.

Cependant, dans le cas d'un tapis de dégivrage 3 à matrice composite, le tapis de dégivrage 3 peut avantageusement être drapé directement sur le blindage métallique 2. Ceci permet, à la fois, de réaliser le tapis de dégivrage 3 composite directement dans sa forme finale définie par le blindage métallique 2 et de le fixer sur le blindage métallique 2.

Selon un mode de réalisation alternatif, le tapis de dégivrage 3 peut être assemblé, dans une première opération, avec la structure 1, le blindage métallique 2 étant ensuite assemblé avec l'ensemble et fixé sur la structure 1 dans une seconde opération.

Comme précédemment, le tapis de dégivrage 3 peut être assemblé sur la structure 1 par collage. Dans le cas particulier d'une matrice composite, il est encore possible de draper directement le tapis de dégivrage sur la structure 1.

La fixation du blindage métallique 2 sur la structure 1 est réalisé par tout moyen de fixation connu de l'homme du métier. Cependant, le but étant d'améliorer la maintenance, un mode de fixation démontable, tel que rivetage 9 ou vissage 9, est préféré. Un tel mode de fixation permet un démontage du blindage métallique 2 par retrait des rivets 9 ou des vis 9. Le tapis de dégivrage 3 peut être démonté dans le cas d'un montage collé par utilisation de solvant ou par chauffage.

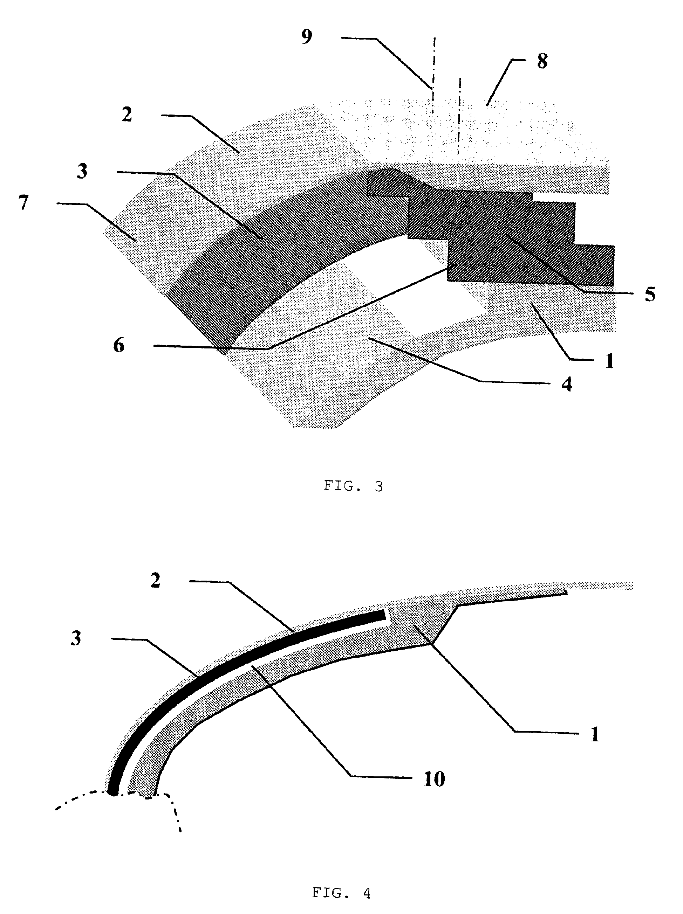

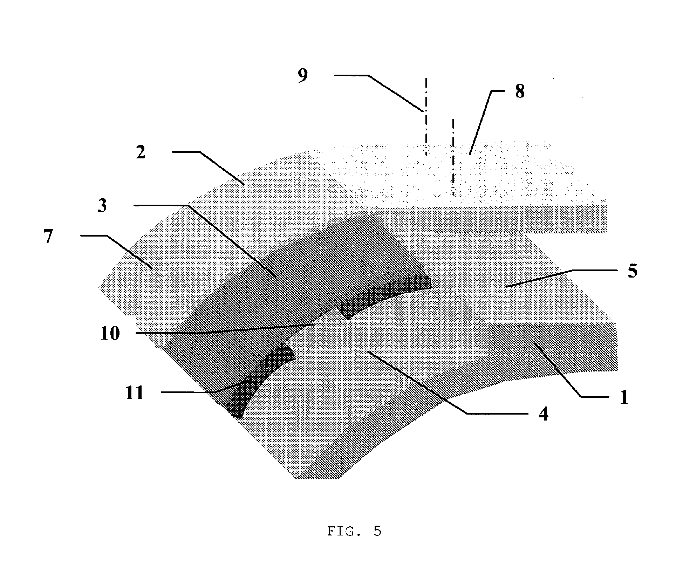

En référence aux figures 4 et 5, il peut apparaître un espace 10 entre le tapis de dégivrage 3 et la structure 1. Cet espace 10 peut être nécessité afin de faciliter la fabrication ou l'assemblage. Il peut aussi être volontairement ménagé ou augmenté, par exemple en augmentant la profondeur du logement 6.

L'efficacité du tapis de dégivrage 3 est d'autant meilleure que ledit tapis 3 est plaqué contre le blindage métallique 2. Pour cela, le procédé d'assemblage comprend avantageusement une étape d'injection d'un matériau de remplissage 11 dans ledit espace 10 délimité entre le tapis de dégivrage 3 et la structure 1. L'injection dudit matériau 11 s'effectue par une ouverture pratiquée au travers de la structure 1. L'injection peut encore être réalisée par la tranche. L'ouverture d'injection est avantageusement rebouchée après injection.

Le matériau de remplissage 11 est avantageusement choisi parmi : un gel de silicone, un élastomère sous forme de pâte ou de gel autovulcanisant, une mousse de polyuréthane.

Un tel matériau de remplissage 11 est avantageusement expansif afin de remplir l'espace 10 et de plaquer le tapis de dégivrage 3 contre le blindage métallique 2. De plus, ce matériau de remplissage 11 améliore le rendement thermique du tapis de dégivrage 3 en créant une couche isolante entre le tapis de dégivrage 3 et la structure 2. En poutre, il absorbe les vibrations. Il protège aussi partiellement la structure 1 des chocs en créant une zone de déformation.

Un tel matériau de remplissage 11 est de plus avantageusement non adhérent ni à la surface de la structure 1, ni au tapis de dégivrage 3, afin de faciliter le démontage de l'ensemble.

## Revendications

1. Procédé d'assemblage d'un tapis de dégivrage (3) et d'un blindage métallique (2) externe de protection, sur une structure (1), telle une structure (1) de bord d'attaque de voilure, comportant les étapes suivantes ;
fabrication d'un tapis de dégivrage (3) indépendant de ladite structure (1),
mise en place du tapis de dégivrage (3), entre ladite structure (1) et le blindage métallique (2), ledit tapis de dégivrage (3) ne couvrant qu'une partie (4) de la surface externe de ladite structure (1),
fixation dudit blindage métallique (2), couvrant entièrement ledit tapis de dégivrage (3), sur la partie (5) de la surface externe de ladite structure (1) non couverte par ledit tapis de dégivrage (3),
**caractérisé en ce que** ledit blindage métallique (2) présente une épaisseur réduite dans la partie (7) couvrant le tapis de dégivrage (3) et une épaisseur augmentée dans la partie (8) ne couvrant pas le tapis de dégivrage (3).

2. Procédé selon la revendication 1, où le tapis de dégivrage (3) comprend une matrice élastomère.

3. Procédé selon la revendication 1, où le tapis de dégivrage (3) comprend une matrice composite.

4. Procédé selon l'une quelconque des revendications 1 à 3, où le tapis de dégivrage (3) comprend un réseau de résistances chauffantes en métal.

5. Procédé selon l'une quelconque des revendications 1 à 4, où le tapis de dégivrage (3) comprend un réseau de résistances chauffantes en fibres conductrices.

6. Procédé selon l'une quelconque des revendications 1 à 5, où la structure (1) présente sur sa face externe, un logement (6) apte à accueillir le tapis de dégivrage (3).

7. Procédé selon l'une quelconque des revendications 1 à 6, où la structure (1) est métallique ou composite.

8. Procédé selon l'une quelconque des revendications 1 à 7, où le tapis de dégivrage (3) est mis en place par assemblage préalable avec le blindage métallique (2).

9. Procédé selon l'une quelconque des revendications 1 à 8, où le tapis de dégivrage (3) est collé sur le blindage métallique (2).

10. Procédé selon l'une quelconque des revendications 3 à 8, où le tapis de dégivrage (3) composite est directement drapé sur le blindage métallique (2).

11. Procédé selon l'une quelconque des revendications 1 à 7, où le tapis de dégivrage (3) est mis en place par assemblage préalable avec la structure (1).

12. Procédé selon l'une quelconque des revendications précédentes, où la fixation du blindage métallique (2) sur la structure (1) est réalisée par rivetage ou par vissage.

13. Procédé selon l'une quelconque des revendications précédentes, comprenant encore une étape d'injection d'un matériau de remplissage (11) dans un espace (10) délimité entre le tapis de dégivrage (3) et la structure (1).

14. Procédé selon la revendication 13, où le matériau de remplissage (11) est choisi parmi un gel en silicone, un élastomère sous forme de pâte ou de gel autovulcanisant et une mousse de polyuréthane.

## Patentansprüche

1. Verfahren zum Zusammenbau einer Enteisungsmatte (3) und einer außenliegenden schützenden Metallkapselung (2) auf einer Konstruktion (1), wie z.B. der Konstruktion (1) einer Tragflächenvorderkante, wobei dieses Verfahren die folgenden Schritte umfasst:
Herstellung einer von der genannten Konstruktion (1) unabhängigen Enteisungsmatte (3),
Einbau der Enteisungsmatte (3) zwischen der genannten Konstruktion (1) und der Metallkapselung(2), wobei die genannte Enteisungsmatte (3) nur einen Teil (4) der Aussenfläche der genannten Konstruktion (1) bedeckt,
Befestigung der genannten Metallkapselung(2), welche die genannte Enteisungsmatte (3) komplett abdeckt, auf dem Teil (5) der Aussenfläche der genannten Konstruktion (1), welcher nicht mit der genannten Enteisungsmatte (3) abgedeckt ist,
**dadurch gekennzeichnet , dass** die genannte Metallkapselung(2) eine geringere Dicke in dem Teil (7), welcher die Enteisungsmatte (3) abdeckt, und eine erhöhte Dicke in dem Teil (8), der die Enteisungsmatte (3) nicht abdeckt, aufweist.

2. Verfahren gemäß dem Patentanspruch 1, bei dem die Enteisungsmatte (3) eine Elastomermatrix umfasst.

3. Verfahren gemäß dem Patentanspruch 1, bei dem die Enteisungsmatte (3) eine Verbundstoffmatrix umfasst.

4. Verfahren gemäß einem der Patentansprüche 1 bis 3, bei dem die Enteisungsmatte (3) ein aus Metall-Heizwiderständen bestehendes Netzwerk umfasst.

5. Verfahren gemäß einem der Patentansprüche 1 bis 4, bei dem die Enteisungsmatte (3) ein [30] aus Heizwiderständen aus leitfähigen Fasern bestehendes Netzwerk umfasst.

6. Verfahren gemäß einem der Patentansprüche 1 bis 5, bei dem die Konstruktion (1) auf ihrer Aussenseite eine Aussparung (6) aufweist, die geeignet ist, die Enteisungsmatte (3) aufzunehmen.

7. Verfahren gemäß einem der Patentansprüche 1 bis 6, bei dem die Konstruktion (1) aus Metall oder Verbundstoff besteht.

8. Verfahren gemäß einem der Patentansprüche 1 bis 7, bei dem die Enteisungsmatte (3) im Wege der Vormontage mit der Metallkapselung (2) eingebaut wird.

9. Verfahren gemäß einem der Patentansprüche 1 bis 8, bei dem die Enteisungsmatte (3) auf die Metallkapselung(2) aufgeklebt wird.

10. Verfahren gemäß einem der Patentansprüche 3 bis 8, bei dem die Verbundstoff-Enteisungsmatte (3) direkt auf die Metallkapselung(2) aufgezogen wird.

11. Verfahren gemäß einem der Patentansprüche 1 bis 7, bei dem die Enteisungsmatte (3) im Wege der [10] Vormontage mit der Konstruktion (1) eingebaut wird.

12. Verfahren gemäß einem der voranstehend genannten Patentansprüche, bei dem die Befestigung der Metallkapselung (2) auf der Konstruktion (1) im Wege der genieteten oder geschraubten Verbindung erfolgt.

13. Verfahren gemäß einem der voranstehend genannten Patentansprüche, welches einen weiteren Schritt umfasst, bei dem ein Füllwerkstoff (11) in einen begrenzten Zwischenraum (10) zwischen der Enteisungsmatte (3) und der Konstruktion (1) eingespritzt wird.

14. Verfahren gemäß dem Patentanspruch 13, bei dem der Füllstoff (11) ausgewählt ist aus einem Silikon-Gel, einem Elastomer in Form einer selbstvulkanisierenden Paste oder eines selbstvulkanisierenden Gels und einem Polyurethan-Schaum.

## Claims

1. A method of assembling a de-icing mat (3) and an external protective metal shield (2) on a structure (1), such as a wing leading edge structure (1), comprising the following steps:
manufacturing a de-icing mat (3) independent of the said structure (1),
mounting the de-icing mat (3) between the said structure (1) and the metal shield (2), the de-icing mat (3) covering only part (4) of the external surface of the structure (1),
fixing the metal shield (2), entirely covering the de-icing mat (3), to the part (5) of the external surface of the structure (1) not covered by the de-icing mat (3),
**characterised in that** the metal shield (2) has a reduced thickness in the part (7) covering the de-icing mat (3) and an increased thickness in the part (8) not covering the de-icing mat (3).

2. A method according to claim 1, in which the de-icing mat (3) comprises an elastomer matrix.

3. A method according to claim 1, in which the de-icing mat (3) comprises a composite matrix.

4. A method according to any one of claims 1 to 3, in which the de-icing mat (3) comprises an array of heating resistors made of metal.

5. A method according to any one of claims 1 to 4, in which the de-icing mat (3) comprises an array of heating resistors made of conductive fibres.

6. A method according to any one of claims 1 to 5, in which the structure (1) is provided on its external face with a housing (6) suitable for receiving the de-icing mat (3).

7. A method according to any one of claims 1 to 6, in which the structure (1) is made of metal or composite.

8. A method according to any one of claims 1 to 7, in which the de-icing mat (3) is mounted by pre-assembly with the metal shield (2).

9. A method according to any one of claims 1 to 8, in which the de-icing mat (3) is bonded to the metal shield (2).

10. A method according to any one of claims 3 to 8, in which the composite de-icing mat (3) is draped directly on the metal shield (2).

11. A method according to any one of claims 1 to 7, in which the de-icing mat (3) is mounted by pre-assembly with the structure (1).

12. A method according to any one of the preceding claims, in which the metal shield (2) is fixed to the structure (1) by riveting or screwing.

13. A method according to any one of the preceding claims, further comprising a step of injecting a filling material (11) into a space (10) delimited between the de-icing mat (3) and the structure (1).

14. A method according to claim 13, in which the filling material (11) is selected from a silicone gel, an elastomer in the form of a self-curing paste or gel and a polyurethane foam.
